# EUROPÄISCHE PATENTSCHRIFT

(11) **EP 3 617 532 B1**
(45) Veröffentlichungstag und Bekanntmachung des Hinweises auf die Patenterteilung: **12.08.2020**
(21) Anmeldenummer: 19176216.0
(22) Anmeldetag: 23.05.2019
(51) Int. Cl.: F16B 15/00, F16B 27/00, F16B 15/06

(54) **BEFESTIGUNGSELEMENT AUS HOLZ UND/ODER HOLZWERKSTOFFEN SOWIE HALTEGURT MIT BEFESTIGUNGSELEMENTEN FÜR EIN ENERGIEBETRIEBENES SETZGERÄT**
FASTENER MADE OF WOOD AND/OR WOODEN MATERIALS AND TETHER WITH FASTENING ELEMENTS FOR A POWERED SETTING DEVICE
ÉLÉMENT DE FIXATION EN BOIS ET / OU EN MATÉRIAUX DÉRIVÉ DU BOIS AINSI QUE CEINTURE DE MAINTIEN POURVU D'ÉLÉMENTS DE FIXATION POUR UN APPAREIL DE POSE CONSOMMATEUR D'ÉNERGIE

(30) Priorität: 29.08.2018 DE 102018121065
(43) Veröffentlichungstag der Anmeldung: 04.03.2020
(73) Patentinhaber: Baussmann Collated Fasteners GmbH, 57413 Finnentrop (DE)
(72) Erfinder: Baußmann, Winfried, 57413 Finnentrop (DE)
(74) Vertreter: Ostriga Sonnet Wirths & Vorwerk

(56) Entgegenhaltungen:
- EP-A1- 2 642 137
- EP-A2- 0 385 227
- WO-A1-2011/063820
- DE-A1-102006 058 935
- DE-A1-102017 100 753
- DE-U1-202016 101 860
- FR-A- 1 003 401
- US-A- 5 181 886
- US-A1- 2007 160 442

## Beschreibung

Die Erfindung betrifft ein Befestigungselement aus Holz und/oder Holzwerkstoffen zum Verbinden von mindestens zwei Bauteilen aus Holz, bestehend aus einem Schaft und einem an einem Ende des Schaftes angeordneten sich verjüngenden Bereich.

Derartige Befestigungselemente sind beispielsweise aus der CN 101158369 A bekannt. In dieser Druckschrift werden so genannte Streifennägel aus Bambus offenbart, die aus dünnen Bambusstreifen hergestellt und in einem Trockenofen getrocknet werden. Durch die Auftragung von Kleber, erneute Trocknung, das Zusammenlegen von mehreren Streifen und das Heißpressen in einer Presse, entstehen Rohlinge die auf die benötigte Nagellänge zugeschnitten, zugefräst und zu einem Streifennagel verarbeitet werden, wobei die Nagelenden, also der sich verjüngende Bereich zu einer Kegelform zugeschnitten wird.

Derartige Holznägel können Metallnägel ersetzen, insbesondere bei der Anwendung für Einrichtungsarbeiten, Möbel oder auch bei Holzkonstruktionen und weisen keine Korrosion auf. Auch das Dokument DE 10 2017 100753 A zeigt Befestigungselemente nach dem Stand der Technik.

Darüber hinaus sind derartige Befestigungselemente auch aus der DE 10 2015 107 371.4 bekannt. In dieser Druckschrift werden Holznägel auch aus Buchenholz offenbart, deren sich verjüngender Bereich (Nagelspitze) als kegelförmige Rundspitze ausgebildet ist.

In beiden Druckschriften ist darüber hinaus offenbart, dass die jeweiligen Befestigungselemente aus Holz mit durchtrennbaren Verbindungsmittel zu Nagelstreifen zusammengefügt sind, wobei bei Verwenden der Nagelstreifen in einem Nagelsetzgerät diese Verbindungsmittel automatisch abgeschert werden.

Nachteiligerweise hat man jedoch in der Praxis und auch bei Versuchen festgestellt, dass Befestigungselemente mit kegelförmig sich verjüngenden Bereich (Nagelspitze) einerseits häufig nicht geradlinig in Bauteile aus Holz eintreibbar sind und andererseits diese Bauteile meist beschädigt werden, weil sich Risse und Spalten in der Holzmatrix bilden.

Die Aufgabe der Erfindung besteht deshalb darin, ein neues Befestigungselement aus Holz und/oder Holzwerkstoffen zu schaffen, mit dem auf deutlich verbesserte Weise ein gradliniges Eintreiben möglich ist, ohne dass Beschädigungen der Bauteile außerhalb des Eintreibbereiches hervorgerufen werden.

Die Lösung der Aufgabe ergibt sich aus einem Befestigungselement gemäß den nachfolgenden Merkmalen des Anspruches 1:
Befestigungselement aus Holz und/oder Holzwerkstoffen zum Verbinden von mindestens zwei Bauteilen aus Holz, bestehend aus einem Schaft und einem an einem Ende des Schaftes angeordneten sich verjüngenden Bereich, dadurch gekennzeichnet, dass die Außenkontur des sich verjüngenden Bereiches umlaufend im Wesentlichen einer ballistischen Kurve entspricht, dass das freie Ende des sich verjüngenden Bereiches abgerundet ausgebildet ist und dass die Länge des sich verjüngenden Bereiches kürzer ist, als das 1,3-Fache des Schaftdurchmessers des Befestigungselementes.

Das erfindungsgemäße Befestigungselement hat den wesentlichen Vorteil, dass es weitestgehend geradlinig und ohne nennenswerte Beschädigung der Holzmatrix des Bauteils in letzteres eingetrieben werden kann. Dieser Vorteil hat sich bei umfangreichen Versuchen auch gerade im Vergleich mit Befestigungselementen aus Holz, die einen kegelförmig sich verjüngenden Bereich (Nagelspitze) aufweisen, ergeben.

Durch den erfindungsgemäßen Einsatz eines Befestigungselementes mit einem sich verjüngenden Bereich, der umlaufend im Wesentlichen einer ballistischen Kurve entspricht, bleibt auch beim Eintreiben das erfindungsgemäße Befestigungselement im sich verjüngenden Bereich im Wesentlichen ohne Beschädigungen der äußeren Form, so dass der kreissymmetrische Körper des sich verjüngenden Bereiches auf vorteilhafte Weise geradlinig und auf überraschende Weise mit deutlich geringeren Einwirkungen auf die Holzmatrix des Bauteils in letzteres eindringen kann.

Die vergleichenden Versuche haben darüber hinaus ergeben, dass bei kegelförmigen sich verjüngenden Bereichen von Befestigungselementen nach dem Stand der Technik sich häufig die "Nagelspitzen" verformen oder abbrechen und aufgrund dieser Verformung und sowie der nicht mehr vorhandenen Kreissymmetrie ein nicht geradliniges Einschlagen sowie auch das Beschädigen der Holzmatrix (Splittern) hervorgerufen wird.

Dadurch dass das freie Ende des sich verjüngenden Bereiches zusätzlich auch noch abgerundet ausgebildet ist, verstärken sich die vorgenannten Vorteile noch.

Letztlich wird durch das Merkmal, dass die Länge des sich verjüngenden Bereiches kürzer ist als das 1,3-Fache des Schaftdurchmessers des Befestigungselementes, die Kompaktheit des sich verjüngenden Bereiches (Nagelspitze) noch erhöht und die Gefahr von Verformungen des sich verjüngenden Bereiches weiter verringert.

Grundsätzlich ist es auch möglich, dass das Befestigungselement so ausgebildet ist, dass das der Schaft in einem Übergangsbereich vor und in dem als ballistische Kurve ausgebildeten Bereich einen verringerten Durchmesser aufweist. Diese sogenannte "Step-Down-Spitze" erleichtert das Eindringen des Befestigungselementes in die Holzbauteile und erhöht die Richtungsstabilität beim Eindringen des Befestigungselementes.

Auch ist es denkbar, dass der Querschnitt des Schaftes des Befestigungselementes kleeblattförmig ausgebildet ist und das die vier über den Umfang des Schaftes verteilt angeordneten Längsnuten im sich verjüngenden Bereich auslaufen. Diese Ausführungsform, wie auch eine Ausführungsform bei der der Schaft des Befestigungselementes an seiner Mantelfläche mit mindestens teilweise einer in Längsrichtung des Schaftes verlaufenden Profilierung versehen ist, erhöht die Sicherheit des geradlinigen Eintreibens der erfindungsgemäßen Befestigungselemente in Holzbauteile sowie den Auszugswiderstand.

Jedoch ist es auch möglich, dass die vorgenannte Profilierung wellenförmig oder schräg zur Längsmittelachse des Schaftes angeordnet ist.

Bei einer weiteren Ausführungsform der Erfindung ist das Befestigungselement an der Mantelfläche des Schaftes mit einem thermoaktiven Adhäsiv beschichtet.

Durch diese Beschichtung des Befestigungselementes wird zunächst der Eintreibwiderstand verringert. Darüber hinaus wird beim Eintreiben des Befestigungselementes durch Reibung Hitze erzeugt, die zunächst das Adhäsiv verflüssigt und nach dem Erkalten eine zusätzliche Klebeverbindung zwischen dem Befestigungselement und der Holzmatrix des aufnehmenden Bauteils erzeugt. Dies verbessert den Auszugswiderstand.

Grundsätzlich ist es möglich, dass das Befestigungselement, d. h. der Schaft einschließlich des sich verjüngende Endbereiches, aus verdichtetem Holz und/oder Holzwerkstoff gebildet wird. Jedoch ist es auch denkbar, dass das Befestigungselement insgesamt aus extrudiertem, verdichtetem Holzwerkstoff oder aus furniertem Holz hergestellt werden kann.

In jeder der vorgenannten Ausführungsformen ist die Dichte des Befestigungselements größer ist als 1,1 g/ cm³.

Der Einsatzbereich der erfindungsgemäßen Befestigungselemente umfasst zum einen das Verbinden von sogenannten vorgelochten Bauteilen, wobei in diesem Fall von dem Verbinden von mindestens zwei Bauteilen ausgegangen wird bei dem mindestens ein Bauteil teilweise mit einer Vorlochung nach Art eines Sackloches versehen ist.

Grundsätzlich ist es jedoch auch möglich, das Befestigungselement zum Verbinden von nicht vorgelochten Bauteilen zu verwenden, wenn ein ausreichender Unterschied in der Dichte zwischen der Dichte des Befestigungselementes und den Holzbauteilen besteht.

Ferner wird ein Haltegurt für ein energiegetriebenes Setzgerät für Befestigungselemente beschrieben, wobei im Haltegurt eine Vielzahl von Befestigungselementen parallel und beabstandet zueinander kraftschlüssig positioniert sind und die Befestigungselemente ein sich verjüngenden Bereich aufweisen, dessen Außenkontur im Wesentlichen umlaufend einer ballistischen Kurve entspricht.

Auf vorteilhafte Weise können damit erfindungsgemäße Befestigungselemente, die in einem flexiblen Haltegurt fixiert sind, mittels eines dafür geeigneten energiebetriebenen Setzgerätes in die zu verbindenden Bauteile eingetrieben werden. Dabei ergibt es sich, dass der Haltegurt sich nach jedem Eintreibvorgang eines Befestigungselementes schrittweise weiterbewegt und ohne Befestigungselemente aus einer dafür am Setzgerät vorgesehenen Öffnung austritt.

Weitere Vorteile der Erfindung ergeben sich aus der nachfolgenden Beschreibung zahlreicher Ausführungsbeispiele:
- Figur 1: Perspektivische Ansicht auf ein Wandelement,
- Figur 2: Schnittdarstellung durch das Wandelement in Figur 1,
- Figur 3: Darstellung des Bereiches III in Figur 2,
- Figuren 4.1 und 4.2: Darstellung einer ersten Ausführungsform eines Befestigungselementes aus Holz und/oder Holzwerkstoffen,
- Figuren 5.1 und 5.2: Darstellung einer zweiten Ausführungsform eines Befestigungselementes aus Holz und/oder Holzwerkstoffen,
- Figuren 6.1 und 6.2: Darstellung einer dritten Ausführungsform eines Befestigungselementes aus Holz und/oder Holzwerkstoffen,
- Figuren 7.1, 7.2 und 7.3: Darstellung einer vierten Ausführungsform eines Befestigungselementes aus Holz und/oder Holzwerkstoffen,

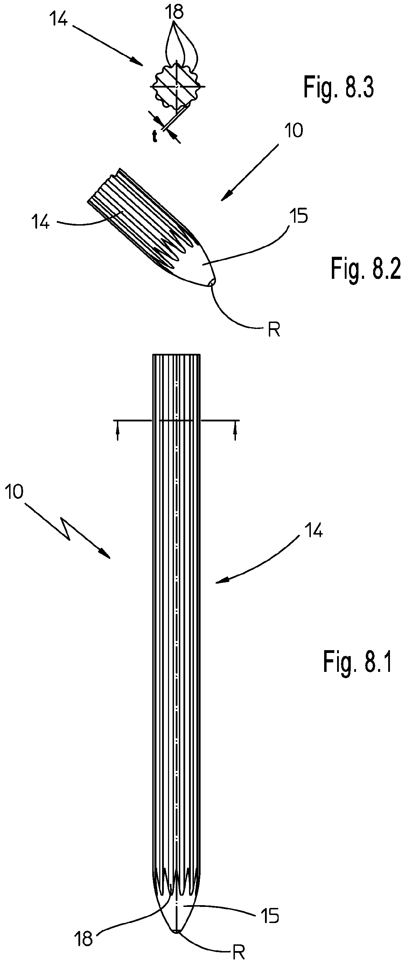

- Figuren 8.1, 8.2 und 8.3: Darstellung einer fünften Ausführungsform eines Befestigungselementes aus Holz und/oder Holzwerkstoffen,
- Figuren 9.1, 9.2 und 9.3: Darstellung einer sechsten Ausführungsform eines Befestigungselementes aus Holz und/oder Holzwerkstoffen,
- Figuren 10.1 und 10.2: Darstellung weiterer Varianten eines hölzernen Befestigungselementes mit unterschiedlich ausgebildeten ballistischen Enden.

In der nachfolgenden Beschreibung zahlreicher Ausführungsformen ist das erfindungsgemäße Befestigungselement aus Holz und/oder Holzwerkstoffen insgesamt mit der Bezugsziffer 10 bezeichnet.

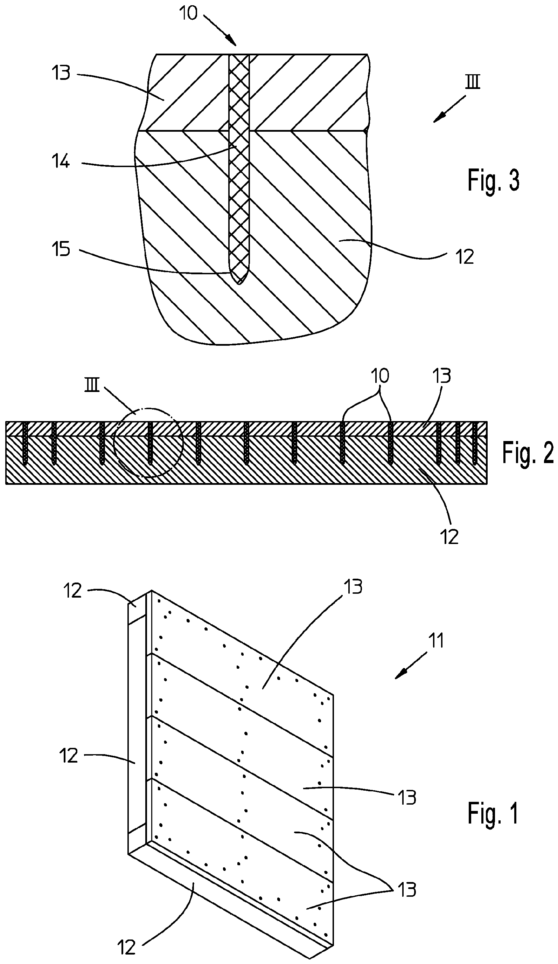

Die Figur 1 zeigt ein Wandelement 11, welches aus einer Holzunterkonstruktion 12 und Flächenelementen aus Holz 13 gebildet ist und mit Hilfe der Befestigungselemente 10 zusammengefügt wurde.

In den Figuren 2 und 3 erkennt man, dass die Verbindung der Flächenelemente aus Holz 13 mit einer Holzunterkonstruktion 12 über zahlreiche Befestigungselemente 10 aus Holz geschieht. Die Befestigungselemente 10 weisen einen Schaft 14 und einen sich verjüngenden Bereich 15 auf.

Die Befestigungselemente 10 aus Holz werden entweder als Einzelstifte mittels eines nicht dargestellten Eintreibgerätes in die Flächenelemente aus Holz / Holzunterkonstruktion 13/12 eingetrieben.

Darüber hinaus ist es jedoch grundsätzlich auch möglich, dass eine Vielzahl von Befestigungselementen 10 in einem Haltegurt angeordnet sind und mittels eines dafür geeigneten energiebetriebenen Setzgerätes in die zu verbindenden Bauteile eingetrieben werden. Dabei ergibt es sich, dass der Haltegurt sich nach jedem Eintreibvorgang eines Befestigungselementes schrittweise weiterbewegt und ohne Befestigungselemente aus einer dafür am Setzgerät vorgesehenen Öffnung austritt.

In den nachfolgenden Figuren sind zahlreiche Ausführungsformen von Befestigungselementen 10 aus Holz und/oder Holzwerkstoffen dargestellt, wobei diese Befestigungselemente 10 vorzugweise aus Rundstäben hergestellt werden, welche durch Trennschneiden in die erforderliche Länge gebracht werden, so dass zylindrische, an ihren Enden rechtwinklige Teilstücke entstehen.

Die zylindrischen Teilstücke werden einseitig mittels eines rotierenden Werkzeuges bearbeitet.

Durch eine variable Rotationsgeschwindigkeit und die Form des rotierenden Werkzeuges in Verbindung mit entsprechender Temperatur des rotierenden Werkzeuges und einem axialen Vorhub und Rückhub des Werkzeuges wird die Kontur des ballistischen Endes geformt und das Befestigungselement 10 auf die gewünschte Länge gebracht.

Auf diese Weise kann das Befestigungselement 10 mit ballistisch ausgebildetem, sich verjüngendem Bereich 15 äußerst rationell und wirtschaftlich hergestellt werden.

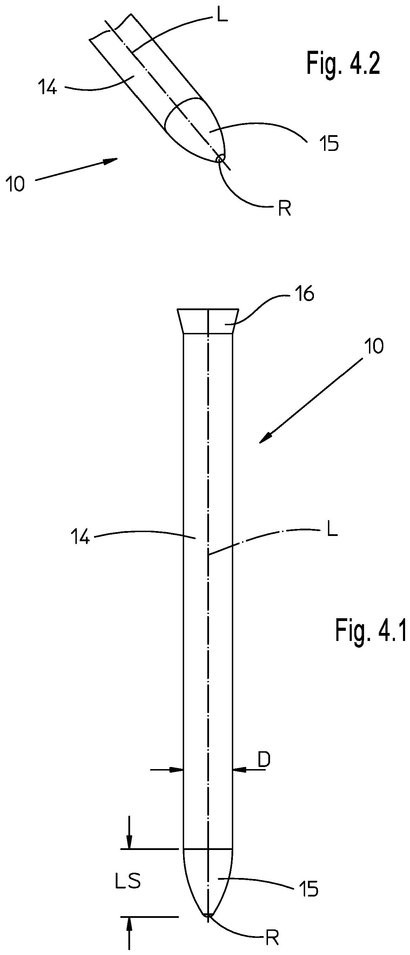

Das in den Figuren 4.1 und 4.2 dargestellte Befestigungselement 10 weist einen Schaft 14 mit einem Durchmesser D auf, welcher eintreibseitig mit einem sich verjüngenden Bereich 15 in Form eines ballistischen Endes versehen ist, das eine Länge LS aufweist. Am gegenüberliegenden Ende des Schaftes 14 ist dieser mit einem kegelstumpfartigen verbreiteten Kopf 16 versehen, wodurch der Durchzugswiderstand, also der Widerstand beispielsweise beim "Abziehen" eines mit Befestigungselementen 10 an einer Holzunterkonstruktion 12 befestigten Flächenelementes aus Holz 13, vergrößert wird. Wichtig ist die Tatsache, dass bei dieser Ausführungsform der sich verjüngende Bereich 15 einen abgerundeten Endabschnitt R aufweist.

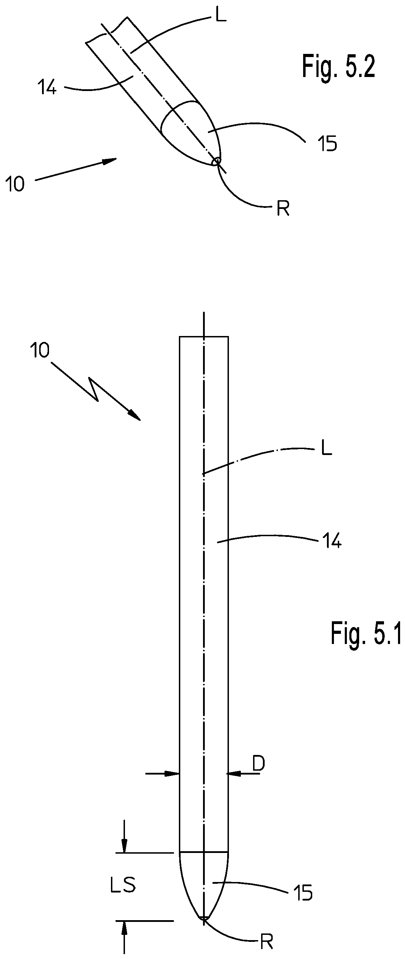

Die Ausführungsform gemäß den Figuren 5.1 und 5.2 entspricht im Wesentlichen der Ausführungsform gemäß den Figuren 4.1 und 4.2, wobei der Endbereich des Schaftes 14 in diesem Fall keinen Kopf 16 aufweist.

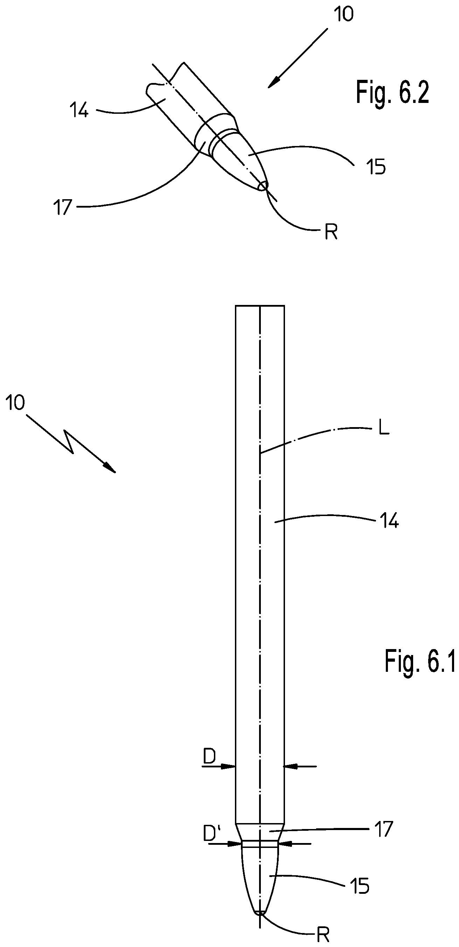

Die Ausführungsform gemäß den Figuren 6.1 und 6.2 ist durch einen zusätzlichen Übergangsbereich 17 zwischen dem Schaft 14 und dem sich verjüngenden Bereich 15 einschließlich abgerundetem Endabschnitt R gekennzeichnet, indem der Durchmesser D des Schaftes 14 sich allmählich auf den anfänglichen Durchmesser D' des sich verjüngenden Bereiches 15 reduziert.

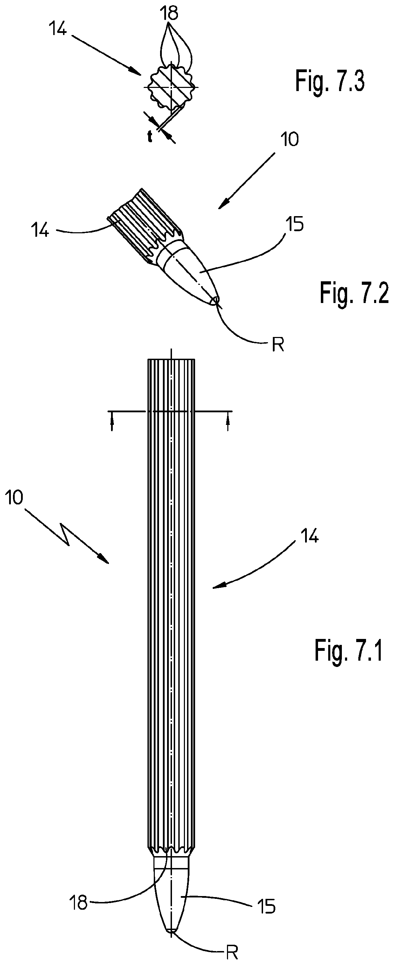

Bei der Ausführungsform gemäß den Figuren 7.1 bis 7.3 weist der Schaft 14 in Richtung seiner Längsmittelachse L zahlreiche Rillen 18 auf, die eine Tiefe t haben und im Übergang zwischen dem Schaft 14 und dem sich verjüngenden Bereich 15 einschließlich abgerundetem Endabschnitt R enden.

Durch diese Ausgestaltung des Befestigungselements 10 ergibt sich beim Eintreibvorgang eine bessere Führung des Befestigungselementes 10 im aufnehmenden Bauteil, so dass die Geradlinigkeit des Eintreibens verbessert wird. Auch verbessert sich durch diese Ausgestaltung der Auszugswiderstand aufgrund der deutlich größeren Mantelfläche des Schaftes 14.

Im Gegensatz dazu laufen die Rillen 18 in der Ausführungsform gemäß den Darstellungen 8.1 bis 8.3 erst sich im verjüngenden Bereich 15 aus.

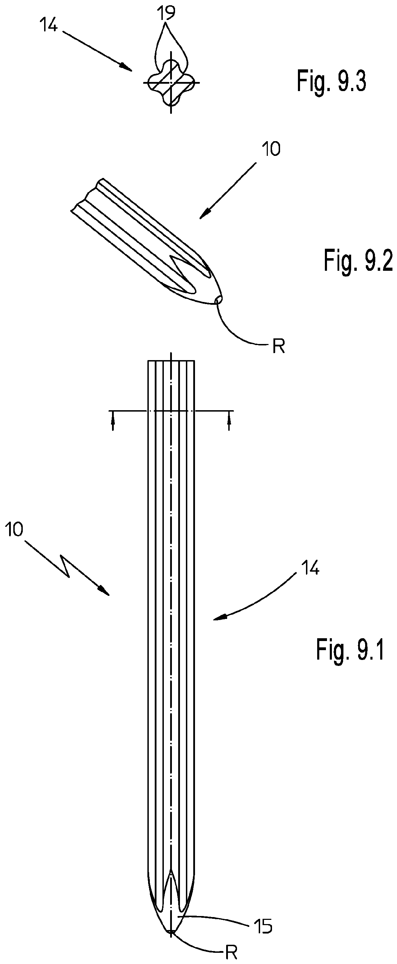

Die Ausführungsform gemäß den Figuren 9.1 bis 9.3 ist durch einen kleeblattförmigen Querschnitt Q (s. Figur 9.3) gekennzeichnet. Die vier jeweils um 90 Grad versetzt im Befestigungselement 10 angeordneten Längsnuten 19 laufen ebenfalls im sich verjüngenden Bereich 15 aus. Auf vorteilhafte Weise wird - wie Versuche gezeigt haben - beim Eintreiben eines derartigen Befestigungselementes 10 die den Eintreibbereich umgebende Holzmatrix lediglich verformt und legt sich nach dem Eintreiben vollflächig an die kleeblattförmige Außenkontur an. Dies vergrößert ebenfalls den Auszugswiderstand.

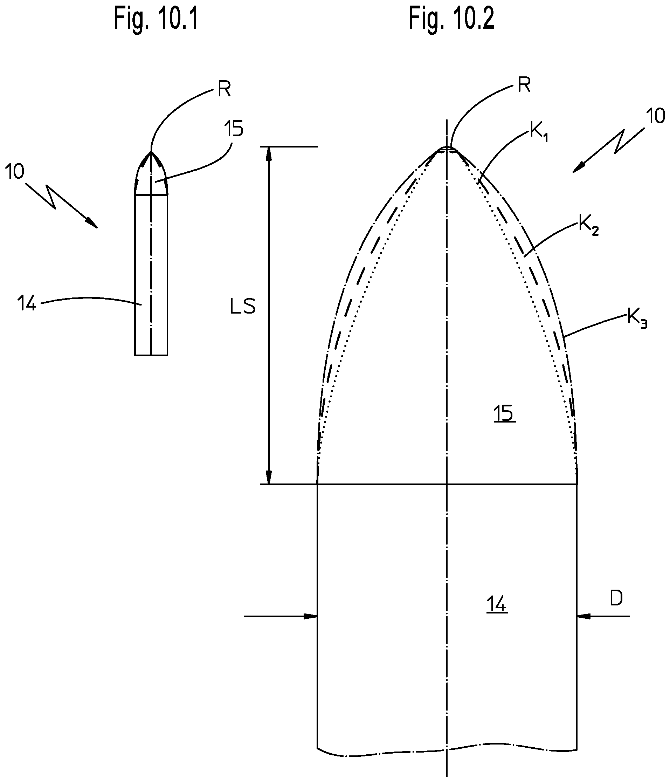

Letztlich zeigen die Figuren 10.1 und 10.2 noch weitere grundsätzliche Varianten eines sich verjüngenden Bereiches 15, der unterschiedliche ballistische Konturen aufweist.

Die innere gepunktete Kontur K₁ des sich verjüngenden Bereiches 15 zeigt eine ballistische Kontur mit einem großen Kurvenradius, die mittlere strichlinierte Kontur K₂ eine ballistische Kontur mit mittleren Kurvenradius und die äußere strichpunktierte Kontur K₃ eine ballistische Kontur mit kleinen Kurvenradius. Die Konturen K₁, K₂ und K₃ ergeben sich also aus dem Durchmesser D des Schaftes 14, der Länge LS (max. 1,3 x D) des sich verjüngenden Bereiches 15 einschließlich des abgerundeten Endabschnitts R und dem Kurvenradius.

## Patentansprüche

1. Befestigungselement (10) aus Holz und/oder Holzwerkstoffen zum Verbinden von mindestens zwei Bauteilen (12, 13) aus Holz, bestehend aus einem Schaft (14) und einem an einem Ende des Schaftes (14) angeordneten sich verjüngenden Bereich (15), **dadurch gekennzeichnet, dass** die Außenkontur (K₁, K₂, K₃) des sich verjüngenden Bereiches (15) umlaufend im Wesentlichen einer ballistischen Kurve entspricht, dass das freie Ende des sich verjüngenden Bereiches (15) abgerundet ausgebildet ist und dass die Länge (LS) des sich verjüngenden Bereiches (15) kürzer ist, als das 1,3-Fache des Schaftdurchmessers (D) des Befestigungselementes (10).

2. Befestigungselement (10) nach einem der vorangehenden Ansprüche, **dadurch gekennzeichnet, dass** der Schaft (14) in einem Übergangsbereich (17) vor und in dem als ballistische Kurve ausgebildeten, sich verjüngenden Bereich (15) einen verringerten Durchmesser (D') aufweist.

3. Befestigungselement (10) nach Anspruch 1, **dadurch gekennzeichnet, dass** der Querschnitt (Q) des Schaftes (14) kleeblattförmig ausgebildet ist und das die vier über den Umfang des Schaftes (14) verteilt angeordneten Längsnuten (19) im sich verjüngenden Bereich (15) auslaufen.

4. Befestigungselement (10) nach einem der Ansprüche 1 oder 2, **dadurch gekennzeichnet, dass** der Schaft an seiner Mantelfläche mindestens teilweise mit einer in Längsrichtung des Schaftes verlaufenden Profilierung versehen ist.

5. Befestigungselement (10) nach einem der Ansprüche 1 oder 2, **dadurch gekennzeichnet, dass** die Profilierung wellenförmig ausgebildet ist.

6. Befestigungselement (10) nach einem der Ansprüche 1 oder 2, **dadurch gekennzeichnet, dass** die Profilierung schräg zur Längsmittelachse (L) des Schaftes angeordnet ist.

7. Befestigungselement (10) nach einem der vorangehenden Ansprüche, **dadurch gekennzeichnet, dass** die Mantelfläche des Schaftes (14) mit einem thermoaktiven Adhäsiv beschichtet ist.

8. Befestigungselement (10) nach einem der vorangehenden Ansprüche, **dadurch gekennzeichnet, dass** der Schaft (14) einschließlich des sich verjüngenden Endbereiches (15) aus verdichtetem Holz und/oder Holzwerkstoff gebildet wird.

9. Befestigungselement (10) nach einem der Ansprüche 1 bis 7, **dadurch gekennzeichnet, dass** der Schaft (14) einschließlich des sich verjüngenden Endbereiches (15) aus furniertem Holz gebildet wird.

10. Befestigungselement (10) nach einem der Ansprüche 1 bis 7, **dadurch gekennzeichnet, dass** der Schaft (14) einschließlich des sich verjüngenden Bereiches (15) aus extrudiertem, verdichtetem Holzwerkstoff gebildet wird.

11. Befestigungselement (10) nach einem der vorangehenden Ansprüche, **dadurch gekennzeichnet, dass** die Dichte des Holzes und/oder Holzwerkstoffes größer ist als 1,1 g/ cm³.

12. Befestigungselement (10) nach einem der vorangehenden Ansprüche, **dadurch gekennzeichnet, dass** das Befestigungselement (10) zum Verbinden von vorgelochten Bauteilen (12, 13) verwendbar ist.

13. Befestigungselement (10) nach einem der Ansprüche 1 bis 11, **dadurch gekennzeichnet, dass** das Befestigungselement zum Verbinden von mindestens zwei Bauteilen (12, 13) verwendbar ist, wobei mindestens ein Bauteil (12 oder 13) teilweise mit einer Vorlochung nach Art eines Sackloches versehen ist.

14. Befestigungselement (10) nach einem der Ansprüche 1 bis 11, **dadurch gekennzeichnet, dass** das Befestigungselement (10) zum Verbinden von nicht vorgelochten Bauteilen (12, 13) verwendbar ist.

## Claims

1. Fastener (10) made of wood and/or wooden materials for joining at least two components (12, 13) made of wood, said fastener consisting of a shank (14) and a tapering region (15) arranged at one end of the shank (14), **characterised in that** the outer contour (K₁, K₂, K₃) around the circumference of the tapering region (15) substantially corresponds to a ballistic curve, **in that** the free end of the tapering region (15) is rounded, and **in that** the length (LS) of the tapering region (15) is shorter than 1.3 times the shank diameter (D) of the fastener (10).

2. Fastener (10) according to any one of the preceding claims, **characterised in that** the shank (14) has a reduced diameter (D') in a transition region (17) before and in the tapering region (15) designed as a ballistic curve.

3. Fastener (10) according to claim 1, **characterised in that** the cross-section (Q) of the shank (14) is shaped like a four-leaf clover, and **in that** the four longitudinal grooves (19) distributed around the circumference of the shank (14) run out in the tapering region (15).

4. Fastener (10) according to any one of claims 1 or 2, **characterised in that** the shank is provided, on at least part of the outer surface thereof, with a profiling that extends in the longitudinal direction of the shank.

5. Fastener (10) according to any one of claims 1 or 2, **characterised in that** the profiling is of corrugated shape.

6. Fastener (10) according to any one of claims 1 or 2, **characterised in that** the profiling is arranged in an inclined manner with respect to the longitudinal central axis (L) of the shank.

7. Fastener (10) according to any one of the preceding claims, **characterised in that** the outer surface of the shank (14) is coated with a thermoactive adhesive.

8. Fastener (10) according to any one of the preceding claims, **characterised in that** the shank (14), including the tapering end region (15), is formed from compressed wood and/or wooden material.

9. Fastener (10) according to any one of claims 1 to 7, **characterised in that** the shank (14), including the tapering end region (15), is formed from veneered wood.

10. Fastener (10) according to any one of claims 1 to 7, **characterised in that** the shank (14), including the tapering region (15), is formed from extruded, compressed wooden material.

11. Fastener (10) according to any one of the preceding claims, **characterised in that** the density of the wood and/or wooden material is greater than 1.1 g/cm³.

12. Fastener (10) according to any one of the preceding claims, **characterised in that** the fastener (10) can be used to join components (12, 13) that have predrilled holes.

13. Fastener (10) according to any one of claims 1 to 11, **characterised in that** the fastener can be used to join at least two components (12, 13), wherein at least one component (12 or 13) is partially provided with a predrilled hole in the form of a blind hole.

14. Fastener (10) according to any one of claims 1 to 11, **characterised in that** the fastener (10) can be used to join components (12, 13) that do not have predrilled holes.

## Revendications

1. Elément de fixation (10) en bois ou en matériaux dérivés du bois pour l'assemblage d'au moins deux pièces (12, 13) en bois, se composant d'une tige (14) et d'une zone de rétrécissement (15) disposée à une extrémité de la tige (14), **caractérisé en ce que** le contour extérieur (K₁, K₂, K₃) de la zone de rétrécissement (15) correspond en périphérie essentiellement à une courbe balistique, **en ce que** l'extrémité libre de la zone de rétrécissement (15) est de forme arrondie, et **en ce que** la longueur (LS) de la zone de rétrécissement est plus courte que 1,3 fois le diamètre de tige (D) de l'élément de fixation (10).

2. Elément de fixation (10) selon l'une des revendications précédentes, **caractérisé en ce que** la tige (14) présente un diamètre réduit (D') dans une zone de transition (17) et avant la zone de rétrécissement (15) réalisée sous la forme d'une courbe balistique.

3. Elément de fixation (10) selon la revendication 1, **caractérisé en ce que** la section transversale (Q) de la tige (14) est réalisée en forme de feuille de trèfle, et **en ce que** les quatre rainures longitudinales (19) disposées de façon répartie sur la périphérie de la tige (14) se terminent dans la zone de rétrécissement (15).

4. Elément de fixation (10) selon l'une des revendications 1 ou 2, **caractérisé en ce que** la tige est dotée à sa surface latérale au moins en partie d'un profilage qui s'étend dans la direction longitudinale de la tige.

5. Elément de fixation (10) selon l'une des revendications 1 ou 2, **caractérisé en ce que** le profilage est réalisé sous forme ondulée.

6. Elément de fixation (10) selon l'une des revendications 1 ou 2, **caractérisé en ce que** le profilage est disposé en oblique par rapport à l'axe central longitudinal (L) de la tige.

7. Elément de fixation (10) selon l'une quelconque des revendications précédentes, **caractérisé en ce que** la surface latérale de la tige (14) est revêtue d'un adhésif thermoactif.

8. Elément de fixation (10) selon l'une quelconque des revendications précédentes, **caractérisé en ce que** la tige (14), y compris la zone d'extrémité de rétrécissement (15), est formée en bois ou en matériau dérivé du bois comprimé.

9. Elément de fixation (10) selon l'une quelconque des revendications 1 à 7, **caractérisé en ce que** la tige (14), y compris la zone d'extrémité de rétrécissement (15), est formée en bois contreplaqué.

10. Elément de fixation (10) selon l'une quelconque des revendications 1 à 7, **caractérisé en ce que** la tige (14), y compris la zone de rétrécissement (15), est formée en un matériau dérivé du bois extrudé et comprimé.

11. Elément de fixation (10) selon l'une quelconque des revendications précédentes, **caractérisé en ce que** la densité du bois et/ou du matériau dérivé du bois est supérieure à 1,1 g/cm³.

12. Elément de fixation (10) selon l'une quelconque des revendications précédentes, **caractérisé en ce que** l'élément de fixation (10) peut être utilisé pour l'assemblage de pièces préalablement percées (12, 13).

13. Elément de fixation (10) selon l'une quelconque des revendications 1 à 11, **caractérisé en ce que** l'élément de fixation peut être utilisé pour l'assemblage d'au moins deux pièces (12, 13), au moins une pièce (12 ou 13) étant dotée en partie d'un perçage préalable à la manière d'un trou borgne.

14. Elément de fixation (10) selon l'une quelconque des revendications 1 à 11, **caractérisé en ce que** l'élément de fixation (10) peut être utilisé pour l'assemblage de pièces non perforées au préalable (12, 13).
